(19) Europäisches Patentamt
European Patent Office
Office européen des brevets

(11) **EP 4 624 086 A1**

(12) **EUROPEAN PATENT APPLICATION**
published in accordance with Art. 153(4) EPC

(43) Date of publication:
01.10.2025 Bulletin 2025/40

(21) Application number: 23894598.4

(22) Date of filing: 21.11.2023

(51) International Patent Classification (IPC):
**B23K 26/21** (2014.01)   **B23K 1/005** (2006.01)
**B23K 26/073** (2006.01)

(52) Cooperative Patent Classification (CPC):
**B23K 1/005; B23K 26/073; B23K 26/21**

(86) International application number:
**PCT/JP2023/041861**

(87) International publication number:
**WO 2024/111593 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 24.11.2022 JP 2022187688

(71) Applicant: FURUKAWA ELECTRIC CO., LTD.
Tokyo 100-8322 (JP)

(72) Inventors:
• SATO, Keigo
  Tokyo 100-8322 (JP)
• MATSUMOTO, Nobuyasu
  Tokyo 100-8322 (JP)

• SHIGEMATSU, Takashi
  Tokyo 100-8322 (JP)
• MATSUMOTO, Ryoya
  Tokyo 100-8322 (JP)
• YASUOKA, Tomomichi
  Tokyo 100-8322 (JP)
• TAKADA, Kazuki
  Tokyo 100-8322 (JP)
• TERADA, Jun
  Tokyo 100-8322 (JP)
• SAKAI, Toshiaki
  Tokyo 100-8322 (JP)
• UMENO, Kazuyuki
  Tokyo 100-8322 (JP)

(74) Representative: SSM Sandmair
Patentanwälte Rechtsanwalt
Partnerschaft mbB
Joseph-Wild-Straße 20
81829 München (DE)

(54) **JOINING METHOD AND LASER PROCESSING DEVICE**

(57)    Provided is a bonding method including: a bonding material melting step of, upon arranging a first face that faces a first direction and that is included in a conductor provided on a circuit board and a bonded part of an electro-conductive portion in the first direction and upon interposing a bonding material having an electric conductivity and having a melting point lower than melting points of the conductor and of the electro-conductive portion between the first face and the bonded part, irradiating laser light having a wavelength of 550 [nm] or shorter on a site of the bonded part opposite to the bonding material to melt the bonding material by thermal conduction at the bonded part; and a solidification step of cooling the molten bonding material to solidify, thereby electrically connecting the conductor and the electro-conductive portion through the bonding material, for example.

FIG.1

**Description**

Field

The present invention relates to a bonding method and a laser processing apparatus.

Background

Reflow soldering has been known as a method of bonding a conductor provided on a circuit board, and an electro-conductive portion such as a bus bar, aimed at electrical connection (see Patent Literatures 1 to **4,** for example). The reflow soldering may be limitedly applicable on occasions, since the heat would adversely affect substrates and components. The application would be further limited when using a solder whose strength reliability is high, since such solder usually has a high melting point, and would further enhance the heat influence.

Citation List

Patent Literature

Patent Literature 1: WO 2021/235196 A
Patent Literature 2: JP 2007-194462 A
Patent Literature 3: JP 3156732 U
Patent Literature 4: JP 2503584 U

Summary

Technical Problem

A possible method as an alternative to the reflow soldering would be melting a bonding material such as an electro-conductive solder interposed between a conductor and an electro-conductive portion, under heating by irradiation of laser light, followed by cooling for solidification, to reach a bonded state.
If the bonding material in this case is structurally difficult to be directly irradiated with the laser light, a possible method would be irradiating the laser light on the electro-conductive portion, and melting the bonding material by thermal conduction through the electro-conductive portion. The laser light typically in the infrared wavelength region is, however, less absorbed by a metal material that composes the electro-conductive portion, so that it would be difficult to set a condition under which the bonding material is melted, without melting the electro-conductive portion as possible.
It is, therefore, one object of the present invention to provide a bonding method and a laser processing apparatus aimed at a case where laser light is irradiated on an electro-conductive portion, an electro-conductive bonding material is melted under heating by thermal conduction through the electro-conductive portion, and the molten bonding material is cooled to solidify, thereby bonding the electro-conductive portion and a conductor provided on a circuit board, and typically to provide an improved and novel bonding method and a laser processing apparatus, with which a desired bonded state will be obtainable more easily and more reliably.

Solution to Problem

A bonding method of the present invention includes, for example, a bonding material melting step of, upon arranging a first face that faces a first direction and that is included in a conductor provided on a circuit board and a bonded part of an electro-conductive portion in the first direction and upon interposing a bonding material having an electric conductivity and having a melting point lower than melting points of the conductor and of the electro-conductive portion between the first face and the bonded part, irradiating laser light having a wavelength of 550 [nm] or shorter on a site of the bonded part opposite to the bonding material to melt the bonding material by thermal conduction at the bonded part; and a solidification step of cooling the molten bonding material to solidify, thereby electrically connecting the conductor and the electro-conductive portion through the bonding material.
In the bonding method, the wavelength of the laser light may be 400 [nm] or longer.
In the bonding method, the wavelength of the laser light may be shorter than 500 [nm].
In the bonding method, the electro-conductive portion may be made of a copper-based material.
In the bonding material melting step in the bonding method, the bonded part may remain unmelted under irradiation of the laser light.

In the bonding method, in the bonded part, a melt-solidified part may be obtained by melting under irradiation of the laser light in the bonding material melting step and then by solidification in a step of bonding the conductor and the electro-conductive portion, and the melt-solidified part may be apart from the bonding material.

In the bonding method, the melt-solidified part may have an aspect ratio of 1 or smaller, the aspect ratio being defined by a ratio of a depth in the first direction to a width in a direction intersecting the first direction.

In the bonding method, the aspect ratio may be 0.5 or smaller.

In the bonding method, energy of the laser light irradiated in the bonding material melting step, per unit volume of the bonded part at a site that overlaps the first face and the bonding material in the first direction, may be 1.5 $[J/mm^3]$ or larger and 12 $[J/mm^3]$ or smaller.

In the bonding method, the energy of the laser light irradiated in the bonding material melting step, per unit volume of the bonded part at the site that overlaps the first face and the bonding material in the first direction, may be 2.5 $[J/mm^3]$ or larger and 7 $[J/mm^3]$ or smaller.

In the bonding material melting step in the bonding method, the laser light may be scanned on a second face which is a site of the bonded part opposite to the bonding material.

In the bonding material melting step in the bonding method, a spot width of the laser light on a second face that is a site of the bonded part opposite to the bonding material may be 0.5 [mm] or larger.

In the bonding material melting step in the bonding method, the spot width of the laser light on the second face that is the site of the bonded part opposite to the bonding material may be 1 [mm] or larger.

In the bonding method, the circuit board may be any one of a glass-epoxy resin board, a ceramic board, or a metal-based board.

In the bonding method, the electro-conductive portion may be a plate-shaped, rod-shaped, or wire-shaped portion.

In the bonding method, the electro-conductive portion may be a foil-shaped portion.

In the bonding material melting step in the bonding method, a gas may be supplied to the bonded part.

In the bonding method, the electro-conductive portion may be a foil-shaped portion, and may include an extension extending from the bonded part in a second direction that intersects the first direction and that is along the first face, and in the bonding material melting step, the gas may be blown in a direction that falls between an opposite direction of the second direction and an opposite direction of the first direction.

A bonding method of the present invention includes, for example, a bonding material melting step of, upon arranging a first face that faces a first direction and that is included in a conductor provided on a circuit board and a bonded part of an electro-conductive portion in the first direction and upon interposing at least a part of a bonding material having an electric conductivity and having a melting point lower than melting points of the conductor and of the electro-conductive portion between the first face and the bonded part, irradiating laser light having a wavelength of 550 [nm] or shorter on a site of the bonded part opposite to the bonding material or on the bonding material to melt the bonding material; and a solidification step of cooling the molten bonding material to solidify, thereby electrically connecting the conductor and the electro-conductive portion through the bonding material.

A laser processing apparatus of the present invention is a laser processing apparatus for, upon arranging a first face that faces a first direction and that is included in a conductor provided on a circuit board and a bonded part of an electro-conductive portion in the first direction and upon interposing a bonding material having an electric conductivity and having a melting point lower than melting points of the conductor and of the electro-conductive portion between the first face and the bonded part, irradiating laser light having a wavelength of 550 [nm] or shorter on a site of the bonded part opposite to the bonding material to melt the bonding material by thermal conduction at the bonded part, the laser processing apparatus including: a laser device configured to output the laser light having the wavelength of 550 [nm] or shorter; and an optical head configured to irradiate the laser light output from the laser device onto the second face.

Advantageous Effects of Invention

The present invention makes it possible to obtain an improved and novel bonding method and a laser processing apparatus, aimed at a case where laser light is irradiated on an electro-conductive portion, a bonding material having an electric conductivity is melted under heating by thermal conduction through the electro-conductive portion, and the molten bonding material is cooled to solidify, thereby bonding the electro-conductive portion and a conductor provided on a circuit board.

Brief Description of Drawings

FIG. 1 is an exemplary schematic structural view of a laser processing apparatus with which a bonding method of a first embodiment is implemented.

FIG. 2 is an exemplary schematic plan view of a workpiece to be processed by the bonding method according of the first embodiment.

FIG. 3 is an exemplary flowchart illustrating procedures of the bonding method according to an embodiment.

FIG. 4 is a schematic plan view illustrating an exemplary scanning locus of laser light, on a surface of the workpiece in the bonding method according to the embodiment.

FIG. 5 is a schematic plan view illustrating another exemplary scanning locus of laser light, different from that illustrated in FIG. 4, on the surface of the workpiece in the bonding method according to the embodiment.

FIG. 6 is a schematic plan view illustrating another exemplary scanning locus of laser light, different from those illustrated in FIGS. 4 and 5, on the surface of the workpiece in the bonding method according to the embodiment.

FIG. 7 is a schematic plan view illustrating an exemplary spot shape of laser light, on the surface of the workpiece in the bonding method according to the embodiment.

FIG. 8 is a schematic plan view illustrating another exemplary spot shape of laser light, different from that illustrated in FIG. 7, on the surface of the workpiece in the bonding method according to the embodiment.

FIG. 9 is a schematic plan view illustrating another exemplary spot shape of laser light, different from those illustrated in FIGS. 7 and 8, on the surface of the workpiece in the bonding method according to the embodiment.

FIG. 10 is a schematic plan view illustrating an exemplary beam profile of laser light, on the surface of the workpiece in the bonding method according to the embodiment.

FIG. 11 is a schematic cross-sectional view of an exemplary part of a circuit board assembly bonded by the bonding method according to the embodiment.

FIG. 12 is a schematic cross-sectional view of another exemplary part of the circuit board assembly, different from that illustrated in FIG. 11, bonded by the bonding method according to the embodiment.

FIG. 13 is a graph illustrating bonded states depending on volume of irradiated sites and irradiation energy in the bonding method according to the embodiment.

FIG. 14 is an exemplary schematic structural view of a laser processing apparatus with which a bonding method of a second embodiment is implemented.

FIG. 15 is an exemplary schematic plan view of a workpiece to be processed by the bonding method according of the second embodiment.

Description of Embodiments

Hereinafter, exemplary embodiments of the present invention will be disclosed. Structures of the embodiments described below, and the functions and results (effects) derived from these structures are merely illustrative. The present invention may be implemented by structures other than those disclosed in the following embodiments. The present invention can obtain at least one of various effects (including derivative effects) obtainable from these structures.

In each drawing, X-direction is denoted by arrow X, Y-direction is denoted by arrow Y, and Z-direction is denoted by arrow Z. The X-direction, the Y-direction, and the Z-direction intersect each other, and are orthogonal to each other. The Z-direction lies, for example, in the normal direction on a surface (processed face) of a workpiece W.

Also note that the ordinal numbers described herein are given only for convenience of distinction of directions, sites and so forth, but neither for indicating priority and order, nor limiting the number.

[First Embodiment]

[Laser Processing Apparatus]

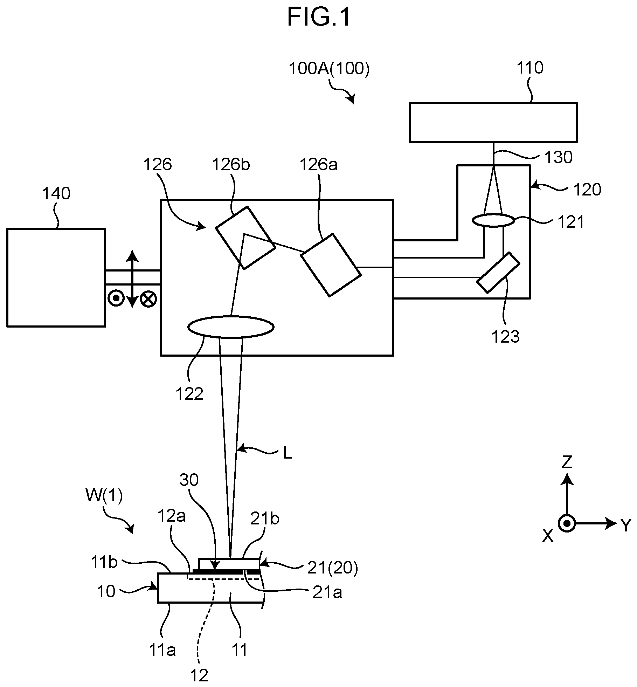

FIG. 1 is a schematic structural view of a laser processing apparatus 100A (100) of the first embodiment. As illustrated in FIG. 1, the laser processing apparatus 100 has a laser device 110, an optical fiber 130, an optical head 120, and a position adjustment mechanism 140.

The laser device 110 has a laser oscillator. An exemplary laser device 110 has a plurality of semiconductor laser elements incorporated therein, and is structured to output a multi-mode laser light having a power of several kilowatts, as a total output of the plurality of semiconductor laser elements.

The laser device 110 outputs laser light typically having a wavelength of 550 [nm] or shorter. The wavelength of the laser light is preferably 400 [nm] or longer and 550 [nm] or shorter, and more preferably 400 [nm] or longer and shorter than 500 [nm].

The optical fiber 130 guides the laser light output from the laser device 110 to the optical head 120.

The optical head 120 is an optical element structured to irradiate the laser light, received through the optical fiber 130 from the laser device 110, onto the workpiece W. The optical head 120 has a collimator lens 121, a mirror 123, a galvano scanner 126, and a condenser lens 122. These collimator lens 121, the mirror 123, the galvano scanner 126, and the condenser lens 122 may also be referred to as optical components.

The collimator lens 121 is structured to collimate the laser light received through the optical fiber 130. The collimated laser light turns into collimated light.

The mirror 123 is structured to reflect the laser light having been turned into collimated light by the collimator lens 121. The laser light reflected by the mirror 123 travels towards the galvano scanner 126. Note that the mirror 123 may be unnecessary in some layout of the optical components inside the optical head 120.

The galvano scanner 126 has two mirrors 126a, 126b, and is structured to control angles of the two mirrors 126a, 126b to move a point of irradiation of the laser light L on the surface of the workpiece W, thereby scanning the laser light L on the surface. The angle of each of the mirror 126a, 126b is independently changeable, typically with use of an unillustrated actuator that contains a motor.

The condenser lens 122 is structured to condense the laser light having passed through the galvano scanner 126, and to irradiate the laser light L (output light) onto the workpiece W.

The position adjustment mechanism 140 is structured to change a position of the optical head 120 relative to the workpiece W.

The laser processing apparatus 100 can scan a spot of the laser light L on the surface of the workpiece W, with the aid of operation of at least either the galvano scanner 126 or the position adjustment mechanism 140. The galvano scanner 126 and the position adjustment mechanism 140 may also be referred to as a scanning mechanism.

[Workpiece]

The workpiece W includes a conductor 12 arranged on a circuit board 10, a terminal 21 of an electro-conductive portion 20, and a bonding material 30. The conductor 12 and the terminal 21 are integrated with the aid of the bonding material 30, by a bonding process with use of the laser processing apparatus 100, whereby a circuit board assembly 1 is formed. The circuit board assembly 1 includes the circuit board 10 on which the conductor 12 is arranged, the electro-conductive portion 20 having the terminal 21, and the bonding material 30. The terminal 21 is an example of the bonded part.

The circuit board 10 is typically a printed circuit board, and has an insulator 11 and the conductor 12. The insulator 11 is made of a glass-epoxy resin, for example. The insulator 11 is, however, not limited thereto, and may alternatively be made of other materials. The conductor 12 is made of a material having relatively high electric conductivity. For example, the conductor 12 is made of a copper-based metal material, such as pure copper or copper alloy. The conductor 12 is, however, not limited thereto, and may alternatively be made of other metal materials. The circuit board 10 is not limited to the glass-epoxy resin board, and may alternatively be ceramic board such as direct copper bonding (DCB) board or active metal brazing (AMB) board; metal-base board or the like; or yet another board.

The insulator 11 has a plate shape, and intersects with the Z-direction, as well as being orthogonal thereto. The insulator 11 has a face 11a and a face 11b. The face 11a faces oppositely to the Z-direction, and intersects with the Z-direction, as well as being orthogonal thereto. The face 11b faces the Z-direction, and intersects with the Z-direction, as well as being orthogonal thereto.

The conductor 12 is integrated with the insulator 11, and has a face 12a exposed in the Z-direction. The face 12a faces the Z-direction, and intersects with the Z-direction, as well as being orthogonal thereto. The face 12a is substantially flush with the face 11a, or protrudes from the face 11a in the Z-direction. Note that the conductor 12 is not limited thereto, and may alternatively be a conductor of a semiconductor device such as switching element, an electric component, or an electronic component mounted on the circuit board 10, for example. The face 12a in this case is given by a face of the conductor of the semiconductor device, the electric component, or the electronic component mounted on the circuit board 10. The face 12a is an example of the first face.

An electro-conductive portion 20A (20) has the terminal 21. The terminal 21 has a plate shape having a nearly uniform thickness, and intersects with the Z-direction, as well as being orthogonal thereto. The terminal 21 has a face 21a and a face 21b. The face 21a faces oppositely to the Z-direction, and intersects with the Z-direction, as well as being orthogonal thereto. The face 21b faces the Z-direction, and intersects with the Z-direction, as well as being orthogonal thereto.

The electro-conductive portion 20 is made of a material having relatively high electric conductivity and relatively high thermal conductivity. For example, the electro-conductive portion 20 is made of a copper-based metal material, such as pure copper or copper alloy. The electro-conductive portion 20 is typically a plate-shaped, rod-shaped, or wire-shaped portion. The electro-conductive portion 20 may also be referred to as a bus bar. The electro-conductive portion 20 is, however, not limited thereto, and may alternatively be made of other metal materials, or may be a foil-shaped portion. More specifically, the electro-conductive portion 20 is typically a terminal, ribbon, power supply line, lead frame, or the like.

The bonding material 30 intersects with the Z-direction, as well as being orthogonal thereto, and spreads while keeping a nearly uniform thickness. The bonding material 30 is at least partially held between the face 12a of the conductor 12 and the face 21a of the terminal 21. The conductor 12, the bonding material 30, and the terminal 21 are stacked in this order in the Z-direction. The face 21b is a part of the terminal 21 positioned opposite to the bonding material 30, and is an example of the second face. The Z-direction is an example of the first direction.

The bonding material 30 has an electric conductivity, and is made of a solder material or a brazing material having a melting point lower than melting points of the conductor 12 and the electro-conductive portion 20. The bonding material 30 is typically a solder material, such as solder paste or solder foil. The solder material may also be referred to as soft solder. The bonding material 30 is, however, not limited thereto, and may alternatively be a brazing material different from the solder material, that is, a so-called hard solder.

The optical head 120 is arranged apart from the face 21b of the terminal 21 in the Z-direction, and is structured to output the laser light L towards the face 21b nearly in a direction opposite to the Z-direction. The laser light L is irradiated on the face 21b of the terminal 21. The terminal 21 conducts heat generated upon irradiation of the laser light L towards the bonding material 30, whereby the bonding material 30 is melted.

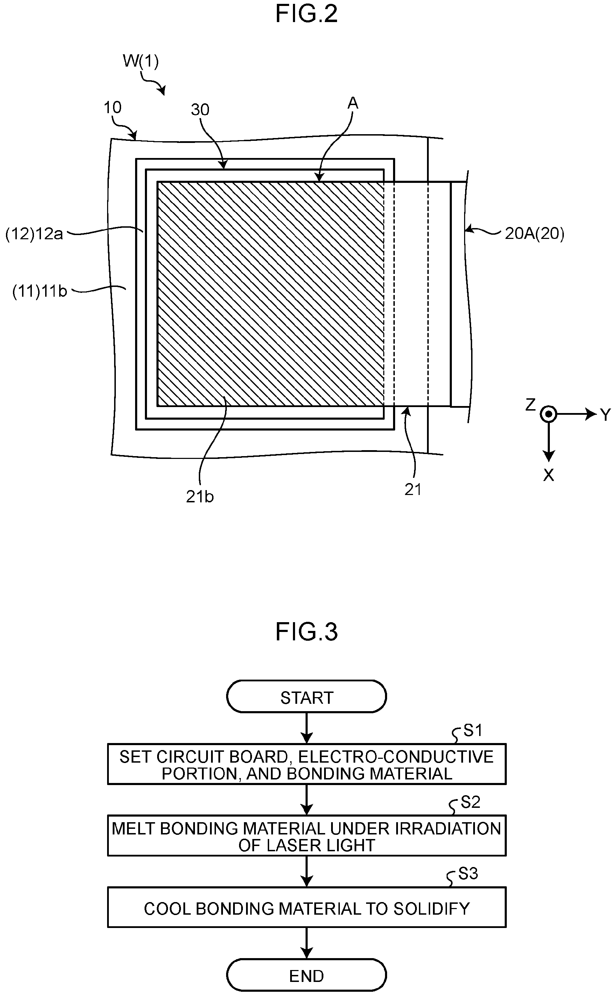

FIG. 2 is a plan view of the workpiece W. As illustrated in FIG. 2, the conductor 12, the bonding material 30, and the terminal 21 are partially stacked in this order in the Z-direction. In this embodiment, a site A of the terminal 21 that overlaps the face 12a of the conductor 12 and the bonding material 30 in the Z-direction is referred to as an irradiated site of the terminal 21. The laser light L is irradiated on the face 21b of the site A. The irradiated site is also an example of the bonded part.

[Procedures of Bonding Method]

FIG. 3 is a flowchart illustrating procedures of the bonding method. As illustrated in FIG. 3, first, the circuit board 10, the electro-conductive portion 20, and the bonding material 30 are set as illustrated in FIGS. 1 and 2 (S1). Next, the laser light L is irradiated on the face 21b of the terminal 21, so as to melt the bonding material 30 under thermal conduction through the terminal 21 (S2). Next, the molten bonding material 30 is solidified under natural cooling or forced cooling (S3). The conductor 12 and the terminal 21 are thus bonded by the solidified bonding material 30, whereby the conductor 12 and the terminal 21 are electrically connected. The conductor 12, the bonding material 30, and the electro-conductive portion 20 constitute a part of an electrical circuit. The bonding material 30 preferably remains on the conductor 12.

It has been known that the metal material demonstrates absorptivity of the laser light having a wavelength of 550 [nm] or shorter, preferably 400 [nm] or longer and 550 [nm] or shorter, more preferably 400 [nm] or longer and shorter than 500 [nm], like in this embodiment, larger than the absorptivity of the laser light having a longer wavelength, which is typically 800 [nm] or longer and 1200 [nm] or shorter. Assuming that the workpiece W like in this embodiment were processed with a laser light having a wavelength of 800 [nm] or longer and 1200 [nm] or shorter, and also that power of the laser light were enhanced in order to melt the bonding material 30 due to low absorptivity of the terminal 21, a possible matter of concern would be that also the terminal 21 melts, thereby causing sputtering and scattering from the terminal 21. In a case where sputtering should occur, a possible event would be short-circuiting in a circuit of the circuit board 10. In contrast, this embodiment is structured to irradiate the laser light L having a wavelength of 550 [nm] or shorter, preferably 400 [nm] or longer and 550 [nm] or shorter, and more preferably 400 [nm] or longer and shorter than 500 [nm], on the face 21b of the terminal 21. This makes it possible to efficiently melt the bonding material 30, without causing sputtering or the like.

[Scanning Pattern (1)]

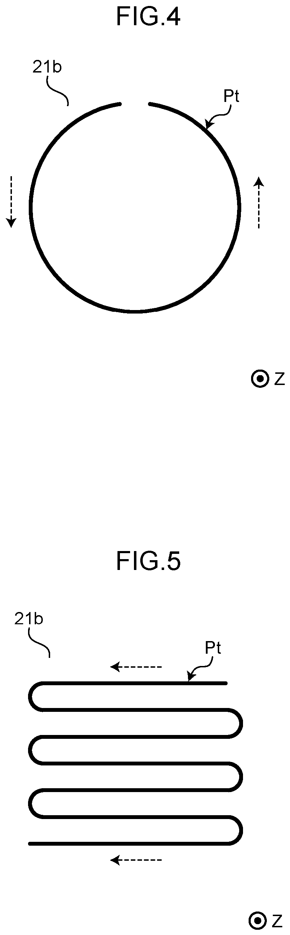

The laser light L may be scanned on the face 21b. FIG. 4 is a plan view illustrating an exemplary scanning locus Pt of a spot of the laser light L on the face 21b. As illustrated in FIG. 4, the scanning locus Pt may be a nearly circular locus.

[Scanning Pattern (2)]

FIG. 5 is a plan view illustrating an exemplary scanning locus Pt of a spot of the laser light L on the face 21b. As illustrated in FIG. 5, the scanning locus Pt may be a zig-zag meandering locus.

[Scanning Pattern (3)]

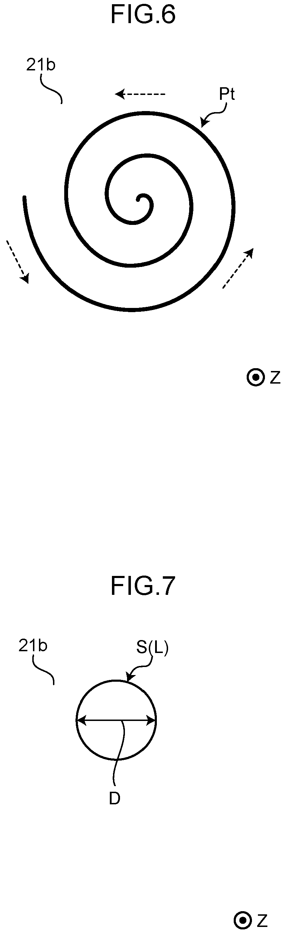

FIG. 6 is a plan view illustrating an exemplary scanning locus Pt of a spot of the laser light L on the face 21b. As illustrated in FIG. 6, the scanning locus Pt may be a spiral locus.

By scanning the spot of the laser light L on the face 21b as illustrated in FIGS. 4 to 6, the bonding material 30 may be suppressed from causing site-dependent variation in the molten state. The scanning can also suppress the energy density of the laser light L from being locally and excessively condensed on the face 21b, and can suppress the face 21b from being melted relatively largely or deeply, and therefore causing sputtering. Note that the scanning locus Pt is not limited to those in the examples illustrated in FIGS. 4 to 6.

[Spot Shape (1)]

FIG. 7 is a plan view illustrating an exemplary spot S of the laser light L on the face 21b. As illustrated in FIG. 7, the spot S may be a circular spot. Investigations by the present inventors have revealed that a diameter D of the spot S is preferably 0.5 [mm] or larger, from the viewpoint of suppressing an excessive increase in energy density ascribed to irradiation with the laser light L, which is more preferably 1 [mm] or larger. The diameter D may also be referred to as a width of the spot S. Note that the diameter D of the spot S can be defined typically by a diameter of an area where the intensity is $1/e^2$ or larger of the peak intensity in the spot S.

[Spot Shape (2)]

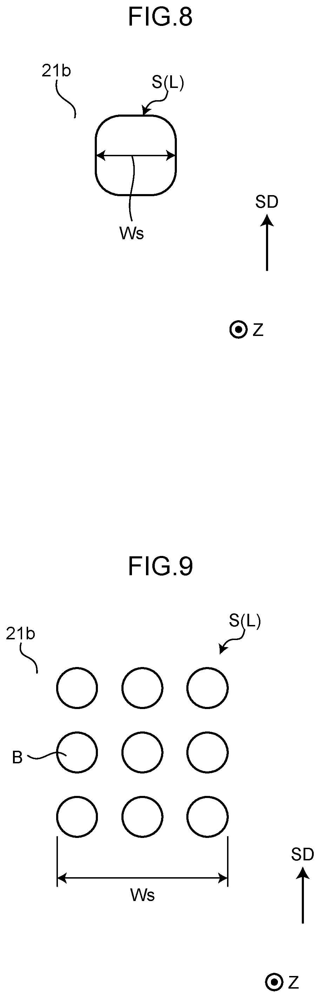

FIG. 8 is a plan view illustrating an exemplary spot S of the laser light L on the face 21b. As illustrated in FIG. 8, the spot S may be a square spot with rounded corners. Investigations by the present inventors have revealed that the width Ws of the spot S in the direction orthogonal to the scanning direction SD is preferably 1 [mm] or larger.

[Spot Shape (3)]

FIG. 9 is a plan view illustrating an exemplary spot S of the laser light L on the face 21b. As illustrated in FIG. 9, the laser light in the optical head 120 may be divided into a plurality of beams B by a beam shaper such as a diffractive optical element (DOE), so that the laser light L will form a plurality of irradiation areas that correspond to the individual beams B on the face 21b. Investigations by the present inventors have revealed that, also in this case, the width Ws of the spot S in the direction orthogonal to the scanning direction SD is preferably 0.5 [mm] or larger, and more preferably 1 [mm] or larger. Note that specifications such as the shape, arrangement, and size of the spot S are not limited to those in the example illustrated in FIGS. 7 to 9.

[Beam Profile]

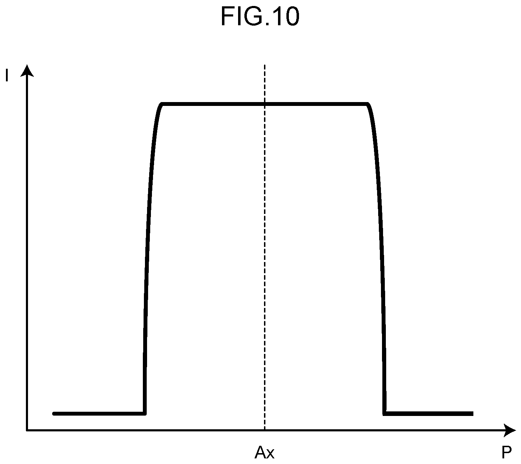

FIG. 10 is an explanatory diagram illustrating an exemplary beam profile of the laser light L. In FIG. 10, the abscissa plots position p on a line that extends on the face 21b while intersecting the Z-direction through the optical axis Ax, meanwhile the ordinate plots intensity I of the laser light. In view of suppressing site-dependent variation in heat input by the laser light L, the beam profile of the laser light L is preferably flat (flat-topped shape) having no local peak as illustrated in FIG. 10. For example, plateau uniformity given by an equation (1) below,

$$U_{P(Z)} = \Delta E_{FWHM}/E_{max} \qquad\qquad (1)$$

(where, $\Delta E_{FWHM}$ represents a full width at half maximum (FWHM) of the peak $E_{max}$ in an energy density histogram $N(E_i)$, and $N(E_i)$ represents a plot of the number of points (x, y) having energy density)
is preferably smaller than 0.5.

[Bonded State (1)]

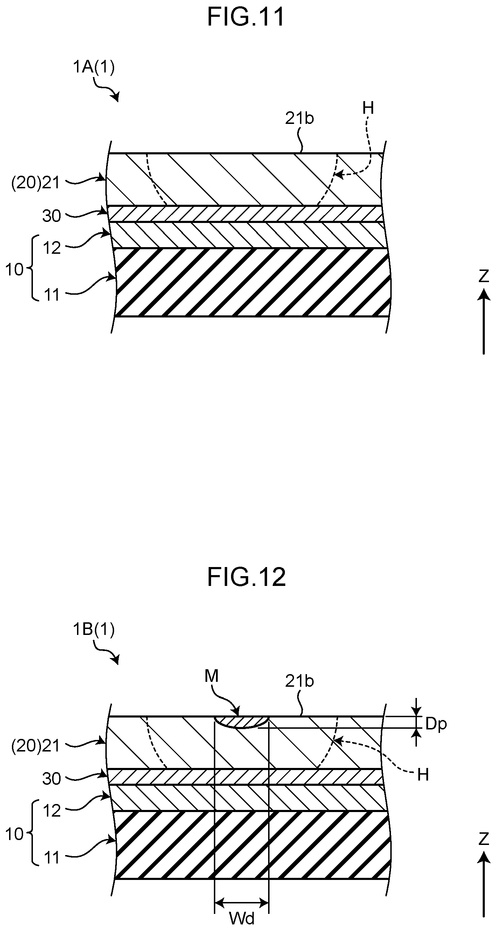

FIG. 11 is a cross-sectional view of a part of a circuit assembly 1A(1), taken nearly along the Z-direction. In the example illustrated in FIG. 11, the terminal 21 does not melt under irradiation of the laser light L in S2 of FIG. 2, only leaving a mark of a heated part H heated under irradiation of the laser light L. The terminal 21 in this case does not form a molten pool, thereby causing neither scattering nor sputtering of the terminal 21 to the surroundings.

[Bonded State (2)]

FIG. 12 is a cross-sectional view of a part of a circuit assembly 1B(1), taken nearly along the Z-direction. In the example illustrated in FIG. 12, the terminal 21 has, formed therein, a heated part H, and a melt-solidified part M having been partially melted and solidified, under irradiation of the laser light L in S2 of FIG. 2. The melt-solidified part M has been formed by melting in S2 of FIG. 2, and by solidification in S3 of FIG. 2.
In the case illustrated in FIG. 12, there is formed a molten pool in S2 of FIG. 2, at a site to be formed the melt-solidified part M. Note that, as illustrated in FIG. 12, the melt-solidified part M does not extend from the face 21b to reach a position in contact with the bonding material 30, thereby having a relatively small volume while being kept apart from the bonding material 30. Investigations by the present inventors have revealed that the melt-solidified part M will not cause sputtering adversely affective to the surrounding circuit, if an aspect ratio thereof is 1 or smaller, where the aspect ratio being defined by a ratio of depth Dp (maximum depth) from the face 21b in the Z-direction, to width Wd (maximum width) in the direction intersecting the Z-direction. It was further revealed that the aspect ratio is preferably 0.5 or smaller.

[Relationships between Volume of Irradiated Site and Irradiation Energy]

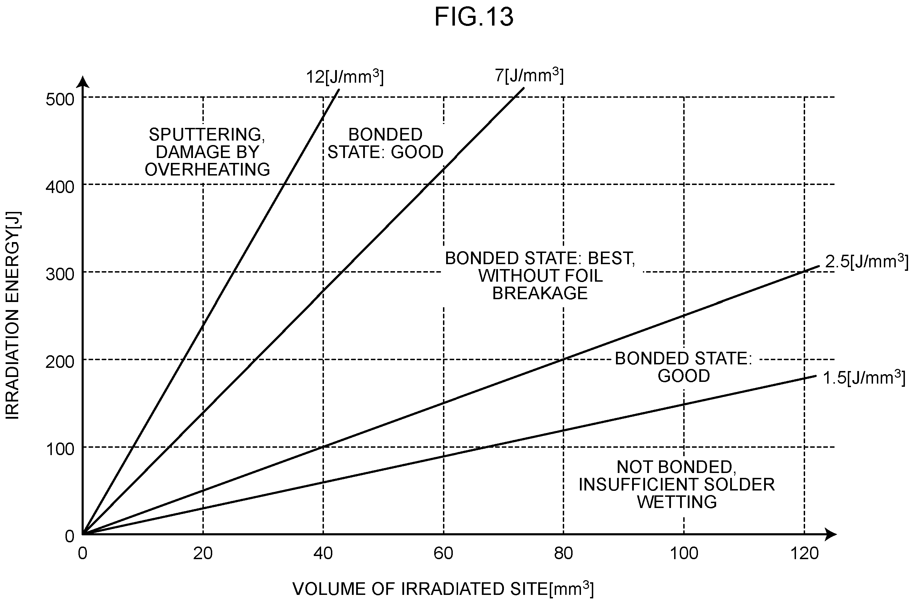

FIG. 13 is a graph illustrating results of investigations of the bonded states of a plurality of samples, obtained under various combinations of the volume of an irradiated site A (see FIG. 2) of the terminal 21, and the irradiation energy of the laser light L on the face 21b. In FIG. 13, the abscissa plots the volume $[mm^3]$ of the irradiated site A, and the ordinate plots the irradiation energy [J].

Investigations by the present inventors have revealed that, as illustrated in FIG. 13, the bond strength varied depending on the irradiation energy $[J/mm^3]$ per unit volume of the irradiated site A, that is, depending on slope of the graph in FIG. 13. More specifically, a desired level of bonded state was not obtainable under an irradiation energy per unit volume of the irradiated site A of smaller than 1.5 $[J/mm^3]$, due to insufficient solder wetting. It was also revealed that a desired level of bonded state was obtainable under an irradiation energy per unit volume of the irradiated site A of 1.5 $[J/mm^3]$ or larger and 12 $[J/mm^3]$ or smaller. The indication "Bonding: good" herein denotes that there is no bonding failure due to insufficient solder wetting, or no substrate damage due to overheating. It was also found that the terminal 21 was more largely melted and sputtered, or the circuit board assembly 1 was damaged due to overheating, under an irradiation energy per unit volume of the irradiated site A of larger than 12 $[J/mm^3]$.

It was also revealed that a more preferred (best) level of bonded state was obtainable, under an irradiation energy per unit volume of the irradiated site A of 2.5 $[J/mm^3]$ or larger and 7 $[J/mm^3]$ or smaller. It was also revealed that the electro-conductive portion 20 did not cause foil breakage even if being made of a foil-shaped portion (metal foil) having a thickness of 0.3 [mm] or smaller, under an irradiation energy of 2.5 $[J/mm^3]$ or larger and 7 $[J/mm^3]$ or smaller.

As has been described above, the bonding method of the present embodiment is designed to irradiate the face 21b of the terminal 21, with the laser light L having a wavelength of 550 [nm] or shorter, preferably 400 [nm] or longer and 550 [nm] or shorter, and more preferably 400 [nm] or longer and shorter than 500 [nm], which may be efficiently absorbed by metal materials such as copper-based material. The present bonding method can more efficiently melt the bonding material 30 by thermal conduction through the terminal 21 without largely melting the terminal 21, and can enable bonding between the conductor 12 and the terminal 21 of the electro-conductive portion 20 with the aid of the bonding material 30, typically with higher quality and higher efficiency.

[Second Embodiment]

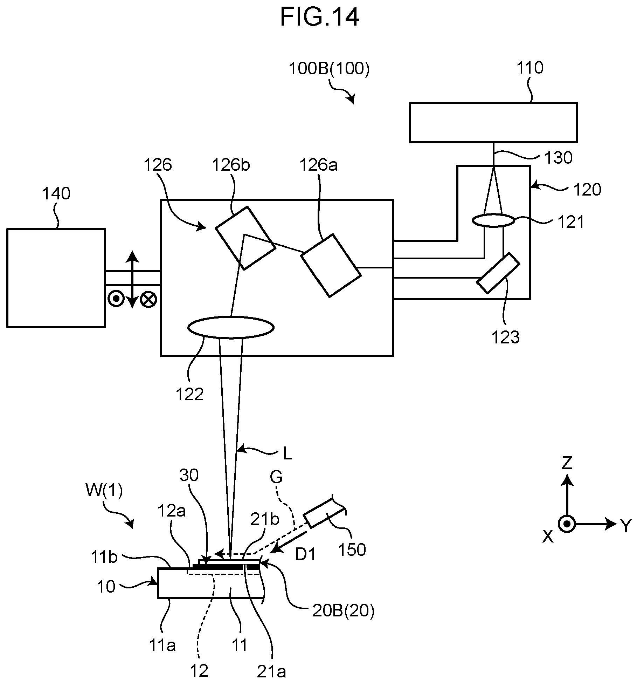

FIG. 14 is a schematic structural view of a laser processing apparatus 100B (100) of the second embodiment. As illustrated in FIG. 1, the laser processing apparatus 100B has the laser device 110, the optical fiber 130, the optical head 120, and the position adjustment mechanism 140, just like the laser processing apparatus 100A in the first embodiment. The laser processing apparatus 100B of this embodiment further includes a gas nozzle 150 as a gas supply mechanism structured to supply a gas G towards the terminal 21. The gas G is supplied both in S2 and S3 (FIG. 3) described above. The gas G is typically an inert gas such as nitrogen gas, and can suppress oxidation burn of the electro-conductive portion 20. The gas G can also have an effect of cooling, or preventing overheating.

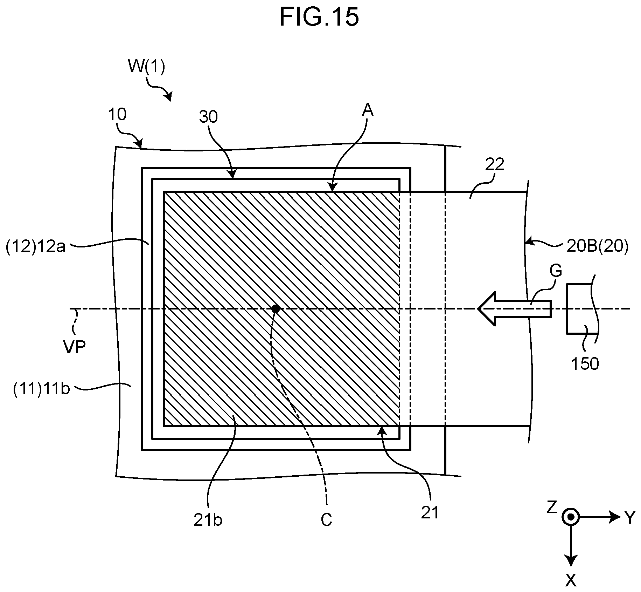

FIG. 15 is a plan view of the workpiece W. In this embodiment, an electro-conductive portion 20B (20) is a foil-shaped portion (metal foil). The electro-conductive portion 20B in this case has a thickness of 0.4 [mm] or thinner, for example. The electro-conductive portion 20B has the terminal 21, and an extension 22 that extends from the terminal 21 in the Y-direction. The terminal 21 is a part to be bonded to the conductor 12 while placing the bonding material 30 in between. The terminal 21 and the extension 22 extend in the Y-direction while keeping a nearly constant width in the X-direction. The Y-direction is an example of the second direction.

The gas nozzle 150 in this case is positioned as illustrated in FIG. 14 away from the terminal 21 in the Z-direction, and positioned away from the geometric center C (center of gravity) of the terminal 21 in the Y-direction in a plan view, when viewed in a direction opposite to the Z-direction as illustrated in FIG. 15. The gas nozzle 150 is structured to blow the gas G in a direction D1 (FIG. 14) which falls between the opposite direction of the Z-direction and the opposite direction of the Y-direction. The gas G in this case is preferably blown towards the geometric center C in a plan view as illustrated in FIG. 15, and is more preferably blown so that an obtainable flow rate distribution or a streamline distribution will be nearly symmetrical about a virtual plane VP that is laid through the geometric center C, and extends in the Z-direction and the Y-direction. The gas G is also preferably blown towards a position deviated from the geometric center C in the Y-direction, typically towards the vicinity of the end of the terminal 21 in the Y-direction, so as to form a stream that flows nearly in the direction opposite to the Y-direction, nearly over the entire part of the terminal 21.

Such blowing of the gas G can exert a force, directed in the opposite direction of the Z-direction and the opposite direction of the Y-direction, on the terminal 21 of the foil-shaped electro-conductive portion 20B. This makes it possible to hold the terminal 21 along the face 12a of the conductor 12 and the bonding material 30 without being turned up, and to avoid welding failure.

Although the embodiments of the present invention have been exemplified above, the aforementioned embodiments are merely illustrative, and are not intended to limit the scope of the invention. The aforementioned embodiments can be implemented in various other forms, and are allowed for various omissions, substitutions, combinations, and modifications without departing from the gist of the invention. In addition, specifications including configuration and shape (structure, type, direction, model, size, length, width, thickness, height, quantity, arrangement, position, material, etc.) may be appropriately modified for implementation. For example, the laser light may be irradiated on an exposed part of the bonding material.

Industrial Applicability

The present invention is applicable to a bonding method and a laser processing apparatus.

Reference Signs List

1, 1A, 1B CIRCUIT BOARD ASSEMBLY

10 CIRCUIT BOARD
11 INSULATOR
11a FACE
11b FACE
12 CONDUCTOR
12a FACE (FIRST FACE)
20, 20A, 20B ELECTRO-CONDUCTIVE PORTION
21 TERMINAL (BONDED PART)
21a FACE
21b FACE (SECOND FACE, SITE)
22 EXTENSION
30 BONDING MATERIAL
100, 100A, 100B LASER PROCESSING APPARATUS
110 LASER DEVICE
120 OPTICAL HEAD
121 COLLIMATOR LENS
122 CONDENSER LENS
123 MIRROR
126 GALVANO SCANNER (SCANNING MECHANISM)
126a, 126b MIRROR
130 OPTICAL FIBER
140 POSITION ADJUSTMENT MECHANISM (SCANNING MECHANISM)
150 GAS NOZZLE (GAS SUPPLY MECHANISM)
A IRRADIATED SITE (SITE, BONDED PART)
Ax OPTICAL AXIS
B BEAM
C GEOMETRIC CENTER
D DIAMETER (WIDTH)
Dp DEPTH
D1 DIRECTION
G GAS
H HEATED PART
I INTENSITY
L LASER LIGHT
M MELT-SOLIDIFIED PART
p POSITION
Pt SCANNING LOCUS
S SPOT
S1 to S3 STEP
VP VIRTUAL PLANE
W WORKPIECE

Wd WIDTH
Ws WIDTH
X DIRECTION
Y DIRECTION
Z DIRECTION (FIRST DIRECTION)

**Claims**

1.  A bonding method comprising:

    a bonding material melting step of, upon arranging a first face that faces a first direction and that is included in a conductor provided on a circuit board and a bonded part of an electro-conductive portion in the first direction and upon interposing a bonding material having an electric conductivity and having a melting point lower than melting points of the conductor and of the electro-conductive portion between the first face and the bonded part, irradiating laser light having a wavelength of 550 [nm] or shorter on a site of the bonded part opposite to the bonding material to melt the bonding material by thermal conduction at the bonded part; and
    a solidification step of cooling the molten bonding material to solidify, thereby electrically connecting the conductor and the electro-conductive portion through the bonding material.

2.  The bonding method according to claim 1, wherein the wavelength of the laser light is 400 [nm] or longer.

3.  The bonding method according to claim 1, wherein the wavelength of the laser light is shorter than 500 [nm].

4.  The bonding method according to claim 1, wherein the electro-conductive portion is made of a copper-based material.

5.  The bonding method according to claim 1, wherein in the bonding material melting step, the bonded part remains unmelted under irradiation of the laser light.

6.  The bonding method according to claim 1, wherein

    in the bonded part, a melt-solidified part is obtained by melting under irradiation of the laser light in the bonding material melting step and then by solidification in a step of bonding the conductor and the electro-conductive portion, and
    the melt-solidified part is apart from the bonding material.

7.  The bonding method according to claim 6, wherein the melt-solidified part has an aspect ratio of 1 or smaller, the aspect ratio being defined by a ratio of a depth in the first direction to a width in a direction intersecting the first direction.

8.  The bonding method according to claim 7, wherein the aspect ratio is 0.5 or smaller.

9.  The bonding method according to claim 1, wherein energy of the laser light irradiated in the bonding material melting step, per unit volume of the bonded part at a site that overlaps the first face and the bonding material in the first direction, is 1.5 [J/mm$^3$] or larger and 12 [J/mm$^3$] or smaller.

10. The bonding method according to claim 9, wherein the energy of the laser light irradiated in the bonding material melting step, per unit volume of the bonded part at the site that overlaps the first face and the bonding material in the first direction, is 2.5 [J/mm$^3$] or larger and 7 [J/mm$^3$] or smaller.

11. The bonding method according to claim 1, wherein, in the bonding material melting step, the laser light is scanned on a second face which is a site of the bonded part opposite to the bonding material.

12. The bonding method according to any one of claims 1 to 11, wherein, in the bonding material melting step, a spot width of the laser light on a second face that is a site of the bonded part opposite to the bonding material is 0.5 [mm] or larger.

13. The bonding method according to claim 12, wherein, in the bonding material melting step, the spot width of the laser light on the second face that is the site of the bonded part opposite to the bonding material is 1 [mm] or larger.

**14.** The bonding method according to any one of claims 1 to 10, wherein the circuit board is any one of a glass-epoxy resin board, a ceramic board, or a metal-based board.

**15.** The bonding method according to any one of claims 1 to 10, wherein the electro-conductive portion is a plate-shaped, rod-shaped, or wire-shaped portion.

**16.** The bonding method according to any one of claims 1 to 10, wherein the electro-conductive portion is a foil-shaped portion.

**17.** The bonding method according to any one of claims 1 to 10, wherein, in the bonding material melting step, a gas is supplied to the bonded part.

**18.** The bonding method according to claim 17, wherein the electro-conductive portion is a foil-shaped portion, and includes an extension extending from the bonded part in a second direction that intersects the first direction and that is along the first face, and
in the bonding material melting step, the gas is blown in a direction that falls between an opposite direction of the second direction and an opposite direction of the first direction.

**19.** A bonding method comprising:

a bonding material melting step of, upon arranging a first face that faces a first direction and that is included in a conductor provided on a circuit board and a bonded part of an electro-conductive portion in the first direction and upon interposing at least a part of a bonding material having an electric conductivity and having a melting point lower than melting points of the conductor and of the electro-conductive portion between the first face and the bonded part, irradiating laser light having a wavelength of 550 [nm] or shorter on a site of the bonded part opposite to the bonding material or on the bonding material to melt the bonding material; and
a solidification step of cooling the molten bonding material to solidify, thereby electrically connecting the conductor and the electro-conductive portion through the bonding material.

**20.** A laser processing apparatus for, upon arranging a first face that faces a first direction and that is included in a conductor provided on a circuit board and a bonded part of an electro-conductive portion in the first direction and upon interposing a bonding material having an electric conductivity and having a melting point lower than melting points of the conductor and of the electro-conductive portion between the first face and the bonded part, irradiating laser light having a wavelength of 550 [nm] or shorter on a site of the bonded part opposite to the bonding material to melt the bonding material by thermal conduction at the bonded part,
the laser processing apparatus comprising:

a laser device configured to output the laser light having the wavelength of 550 [nm] or shorter; and
an optical head configured to irradiate the laser light output from the laser device onto the second face.

# FIG.1

100A(100)

110

140    126    126b    126a

120

130

121

122    123

L

30

W(1)

12a    21b

11b    21(20)

10    21a

11a    11    12

Z

X    Y

## FIG.2

## FIG.3

# FIG.4

21b

Pt

⊙ Z

# FIG.5

21b

Pt

⊙ Z

## FIG.6

## FIG.7

# FIG.8

# FIG.9

# FIG.10

# FIG.11

1A(1)

21b

H

(20)21

30

12

10

11

Z

# FIG.12

1B(1)

M

21b

Dp

(20)21

30

H

12

10

11

Wd

Z

# FIG.13

SPUTTERING, DAMAGE BY OVERHEATING

BONDED STATE: GOOD

BONDED STATE: BEST, WITHOUT FOIL BREAKAGE

BONDED STATE: GOOD

NOT BONDED, INSUFFICIENT SOLDER WETTING

12[J/mm$^3$]

7[J/mm$^3$]

2.5[J/mm$^3$]

1.5[J/mm$^3$]

IRRADIATION ENERGY[J]

VOLUME OF IRRADIATED SITE[mm$^3$]

EP 4 624 086 A1

# FIG.14

# FIG.15

## INTERNATIONAL SEARCH REPORT

| International application No. |
| --- |
| **PCT/JP2023/041861** |

| A. CLASSIFICATION OF SUBJECT MATTER |
| --- |
| **B23K 26/21**(2014.01)i; **B23K 1/005**(2006.01)i; **B23K 26/073**(2006.01)i<br>FI:   B23K26/21 L; B23K26/073; B23K1/005 A |
| According to International Patent Classification (IPC) or to both national classification and IPC |

| B. FIELDS SEARCHED |
| --- |
| Minimum documentation searched (classification system followed by classification symbols)<br>   B23K26/21; B23K1/005; B23K26/073 |
| Documentation searched other than minimum documentation to the extent that such documents are included in the fields searched<br>   Published examined utility model applications of Japan 1922-1996<br>   Published unexamined utility model applications of Japan 1971-2023<br>   Registered utility model specifications of Japan 1996-2023<br>   Published registered utility model applications of Japan 1994-2023 |
| Electronic data base consulted during the international search (name of data base and, where practicable, search terms used) |

### C. DOCUMENTS CONSIDERED TO BE RELEVANT

| Category* | Citation of document, with indication, where appropriate, of the relevant passages | Relevant to claim No. |
| --- | --- | --- |
| Y | JP 2009-105266 A (FUJI ELECTRIC DEVICE TECHNOLOGY CO LTD) 14 May 2009 (2009-05-14)<br>   paragraphs [0012], [0016]-[0019], fig. 1 | 1-4, 6-17, 19-20 |
| A | | 5, 18 |
| Y | JP 2020-072208 A (MITSUBISHI ELECTRIC CORPORATION) 07 May 2020 (2020-05-07)<br>   paragraphs [0014], [0019], [0022], [0039], fig. 5(a) | 1-4, 6-17, 19-20 |
| Y | JP 2020-184577 A (MITSUBISHI ELECTRIC CORPORATION) 12 November 2020 (2020-11-12)<br>   paragraphs [0014], [0017], [0022], fig. 1-2 | 1-4, 6-17, 19-20 |
| Y | JP 2008-254018 A (OLYMPUS CORP) 23 October 2008 (2008-10-23)<br>   paragraph [0080], fig. 1 | 17 |
| A | | 18 |
| Y | JP 62-144871 A (HITACHI LTD) 29 June 1987 (1987-06-29)<br>   p. 2, upper left column, line 17 to lower left column, line 10, fig. 1-2 | 17 |
| A | | 18 |

☑ Further documents are listed in the continuation of Box C.     ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 December 2023** | **16 January 2024** |
| Name and mailing address of the ISA/JP | Authorized officer |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/041861**

| C. | DOCUMENTS CONSIDERED TO BE RELEVANT | |
|---|---|---|
| Category* | Citation of document, with indication, where appropriate, of the relevant passages | Relevant to claim No. |
| A | WO 2017/195625 A1 (MITSUBISHI ELECTRIC CORPORATION) 16 November 2017 (2017-11-16)<br>entire text, all drawings | 1-20 |
| A | JP 04-022591 A (FUJI ELECTRIC CO LTD) 27 January 1992 (1992-01-27)<br>entire text, all drawings | 1-20 |

Form PCT/ISA/210 (second sheet) (January 2015)

**INTERNATIONAL SEARCH REPORT**
Information on patent family members

International application No.

**PCT/JP2023/041861**

| Patent document cited in search report | | | Publication date (day/month/year) | Patent family member(s) | Publication date (day/month/year) |
|---|---|---|---|---|---|
| JP | 2009-105266 | A | 14 May 2009 | (Family: none) | |
| JP | 2020-072208 | A | 07 May 2020 | (Family: none) | |
| JP | 2020-184577 | A | 12 November 2020 | (Family: none) | |
| JP | 2008-254018 | A | 23 October 2008 | (Family: none) | |
| JP | 62-144871 | A | 29 June 1987 | (Family: none) | |
| WO | 2017/195625 | A1 | 16 November 2017 | US 2019/0143434 A1<br>entire text, all drawings<br>DE 112017002424 T5<br>CN 109075149 A | |
| JP | 04-022591 | A | 27 January 1992 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021235196 A
- JP 2007194462 A
- JP 3156732 U
- JP 2503584 U